# EUROPEAN PATENT SPECIFICATION

(11) **EP 2 594 411 B1**
(45) Date of publication and mention of the grant of the patent: **08.01.2014**
(21) Application number: 11189634.6
(22) Date of filing: 17.11.2011
(51) Int. Cl.: B60B 27/02, F16D 41/24

(54) **Hub assembly with ratchet member movable in one direction**
Verteileranordnung mit in einer Richtung bewegbarem Sperrklinkenelement
Ensemble de moyeu avec élément à cliquet mobile dans un sens

(43) Date of publication of application: 22.05.2013
(73) Proprietor: Kunshan Henry Metal Technology Co., Ltd., Jiangsu 215300 (CN)
(72) Inventor: Tho, Kee Ping, Kunshan, Jiangsu (CN)
(74) Representative: Chaillot, Geneviève

(56) References cited:
- EP-A1- 0 522 983
- EP-A1- 2 221 191
- EP-A2- 1 213 217
- WO-A1-00/11366
- GB-A- 2 139 714
- JP-A- 60 018 402
- US-A- 5 515 957
- US-A- 5 964 332
- US-A1- 2009 255 774

## Description

### FIELD OF THE INVENTION

The present invention relates to a hub assembly, and more particularly, to a hub assembly with one ratchet member movable in one direction, and the engagement and disengagement between two ratchet members to be more smooth and efficient.

### BACKGROUND OF THE INVENTION

A conventional bicycle hub assembly generally includes a hub, an axle, a rotatable unit and a gear disk so as to position the axle and to allow the wheel to rotate. According to practical needs, a tubular portion and a derailleur device are equipped. The hub assembly can transmit torque in one direction or in two directions, the one-direction transmission means that the hub rotates in the forward direction to move the bicycle move forward, and the reverse direction cannot move the bicycle. The two-direction transmission means that the hub can transmit torque in both directions. The ratchet mechanism for the one-direction transmission hub can be engaged in radial direction or in axial direction. The radial engagement means that the hub includes teeth in the radial direction and the teeth are engaged with radial ratchet blocks. The axial engagement means that the hub includes teeth in the axial direction and the teeth are engaged with axial ratchet blocks.

When in action, the one-direction transmission ratchet device as disclosed i.e. in GB2139714A, generates a linear movement between the ratchet device and the hub so as to generate a gap to disengage the ratchet device and the hub. Therefore, the hub cannot transmit torque. The linear movement between the ratchet device and the hub can be two-side linear movement and single-side linear movement.

Taiwan Patent No. 088117780 discloses an axle, a hub co-axially connected with the axle, at last one bearing device which includes at least two bearings located between the hub and the axle, so that the hub is rotatable relative to the axle. A rotor is rotatable about the axle and has at least gear connected to the rotor. A free wheel which is located between the rotor and the hub, and has two plates and each plate has a toothed surface. The two toothed surfaces are pushes toward each other by a tension device. The two plates are co-axial with the axle and located on a plane that is perpendicular to the axis of the axle when the wheel is in stopped status. The plates are kept to be inclined relative to the plane perpendicular to the axis of the axle. The two plates are installed consecutively and a spring pushes the two plates toward each other.

Taiwan Utility Patent No. 096219278 discloses a collar made by metal and multiple teeth are defined in an inner periphery of the collar. The teeth extend axially. A ratchet block is made by magnetic material and includes two end surfaces. The shape of the ratchet block is axially and slidably engaged with the teeth of the collar. One end surface has an annular teeth and a fly wheel has another annular teeth which is engaged with the annular teeth of the end surface in one direction. A permanent magnet is connected to the other end surface that does not have the annular teeth.

The hub of the first example includes an annular threaded portion on the right end thereof and the annular threaded portion has teeth which are engaged with one of the plates in radial direction and can be moved linearly relative to the plate. The rotor has teeth which are engaged with the other plate in radial direction, so that linear movements can be made in two directions. The two respective facing surfaces of the two plates have teeth engaged with each other. The annular threaded portion, the two plates and the spring are cooperated to form a free wheel mechanism. The two plates can be moved linearly in two directions. When the pedals are treaded forward, the teeth between the two plates are pushed to each other to transmit torque. When the pedals are treaded backward, the teeth between the two plates slide over each other, and the sliding action is cooperated with the linear movement in two directions, the two plates are separated from each other so that the hub is rotated without torque being output.

The hub of the second example has annular ratchet teeth on the inside of the fly wheel and the ratchet block facing the fly wheel has annular ratchet teeth so as to be engaged with the end of the fly wheel. The ratchet block is attracted by the permanent magnet so as to be normally located in the collar. The ratchet block is moved linearly relative to the collar. The annular ratchet teeth on the other side of the fly wheel are fixed so as to form the linear movement in one direction between the ratchet block and the hub. This also achieves the purpose that the hub transmits torque in only one direction.

However, the teeth in the two examples are composed of an inclined surface and a vertical surface. Therefore, the teeth have a pre-set height and there is a difference in height between the next tooth. During the interactive linear movement between the plates or the ratchet blocks, the inclined surface is too large so that no gap is formed and this causes wearing by friction between the teeth. The friction generates resistance to slow down the linear movement. Besides, the difference of height between the vertical surfaces of the teeth affects the smooth actions between the ratchet teeth. The plates and the ratchet blocks cannot be quickly engaged again and the sensitivity of the transmission is reduced. Besides, the linear movement of the second example, the fly wheel h as an annular ratchet gear connected to one side thereof and this arrangement is difficult to be manufactured the annular ratchet gear is difficult to be machined precisely. Furthermore, there is a gap between the plates and the spring, between the ratchet block and the permanent magnet, and between the hub and the axle. The spring or the permanent magnet is simply mounted to the axle and the two ends of the spring or the permanent magnet are not well positioned so that the parts tend to be inclined or tilt when operation. This affects the transmission of the ratchet mechanism.

The present invention intends to provide a hub assembly to mitigate the shortcomings of the conventional hub assemblies.

### SUMMARY OF THE INVENTION

The present invention relates to a hub assembly comprising:
a hub having a first hole defined in one end thereof and an axle extending through the first hole, a first fixing portion defined in an inner periphery of the first hole and the first fixing portion being parallel to an axis of the hub;
a tubular portion having a second hole in one end thereof and a slot defined in an inner periphery of the second hole, the slot being parallel to an axis of the tubular portion;
a driving member being an annular member and having multiple teeth defined in an outer periphery thereof, the teeth located corresponding to the slot, the driving member having a cone-shaped first ratchet portion formed axially thereon, the cone-shaped first ratchet portion having two triangular contact surfaces which form a cone-shaped surface in radial direction, the two triangular contact surfaces having different areas, the teeth of the driving member engaged with the slot and the driving member movable linearly in the slot;
a passive member being an annular member and having a second fixing portion which is located corresponding to the first fixing portion, the passive member having a cone-shaped second ratchet portion formed axially thereon which is engaged with the first ratchet portion, the second fixing portion being fixed to the first fixing portion, and
a returning member located between the tubular portion and the driving member.

The driving member is movable linearly relative to the tubular portion. The passive member is fixed to the hub so that the linear movement is happened in only one direction. By the triangular cone-shaped first and second ratchet portions, the contact are and the friction between the ratchet portions are reduced, and the engagement and disengagement is more quick and smooth.

The primary object of the present invention is to provide a hub assembly, wherein two ratchet portions are engaged to each other and located between a driving member and a passive member. The teeth of each of the ratchet portions have two triangular contact surfaces in radial direction so as to reduce contact area and when the driving member and the passive member are moved linearly and disengaged from each other. A gap is defined between the teeth so that the operation between the two ratchet portions is more sensitive and quick.

Another object of the present invention is to provide a hub assembly, wherein there are first and second fixing portions between the hub and the passive member so as to be connected to each other. The passive member is fixed in the hub, cooperated with the linear movement of the driving member in the tubular portion, the interference to the movement is reduced and the weight of the hub assembly is also reduced.

Yet another object of the present invention is to provide a hub assembly, wherein a tube is connected between the hub, the driving member, the passive member and the tubular portion. The tube guides the linear movement between the driving member, the passive member and the returning members.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the hub assembly of the present invention;
Fig. 2 is an exploded view to show the hub assembly of the present invention;
Fig. 3 shows the cross sectional view of the driving member;
Fig. 4 shows the cross sectional view of the passive member;
Fig. 5 shows the cross sectional view of the hub assembly of the present invention;
Fig. 6 is an enlarged cross sectional view of the hub assembly of the present invention;
Fig. 7 is an enlarged cross sectional view to show the disengagement between the teeth of the driving member and the passive member of the hub assembly of the present invention;
Fig. 8 is an exploded view to show the second embodiment of the hub assembly of the present invention;
Fig. 9 shows the cross sectional view of the second embodiment of the hub assembly of the present invention, and
Fig. 10 is an enlarged cross sectional view to show the second embodiment of the hub assembly of the present invention.

### DETAILED DESCRIPTION OF THE PREFERRED EMBODIMENT

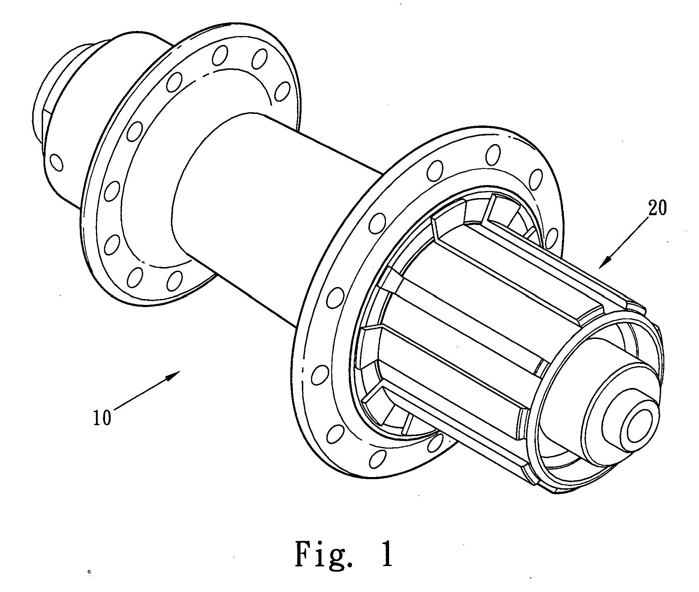

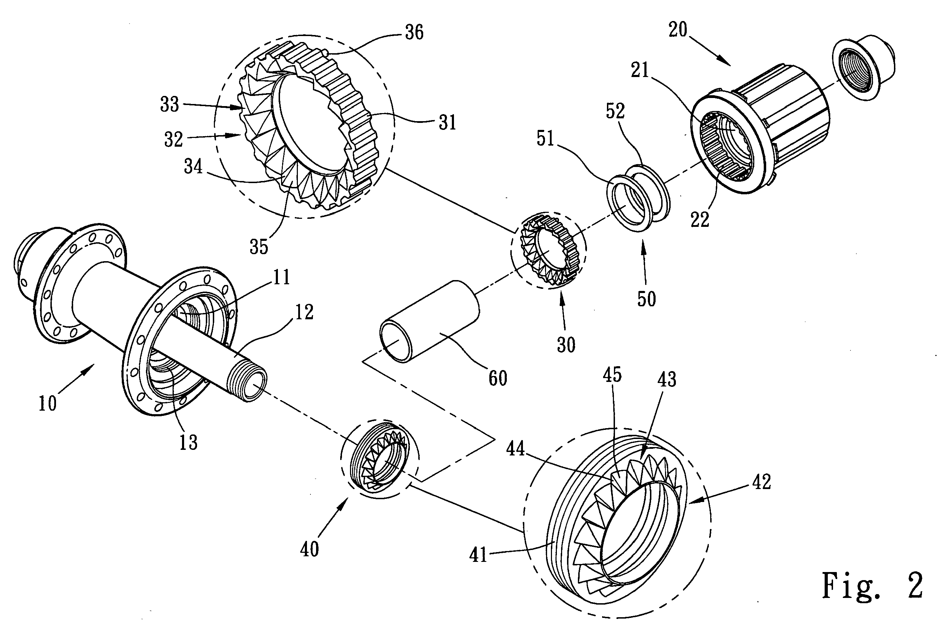

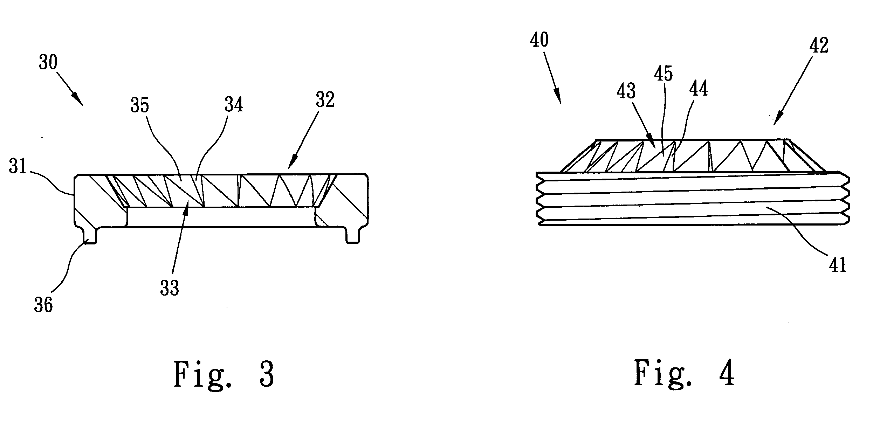

Referring to Figs. 1 to 7, the hub assembly of the present invention comprises a ratchet mechanism located between a hub 10 and a tubular potion 20, wherein the ratchet mechanism comprises a driving member 30 located in the tubular portion 20, a passive member 40 located in the hub 10 and a returning member unit.

The hub 10 is a hollow hub and has a first hole 11 defined in one end thereof and an axle 12 extends through the first hole 11. A first fixing portion 13 is defined in the inner periphery of the first hole 11 and parallel to the axis of the hub 10. The first fixing portion 13 has inner threads located in the first hole 11.

The tubular portion 20 is a hollow tube and has a second hole 21 in one end thereof. A slot 22 is defined in the inner periphery of the second hole 21. The slot 22 is parallel to the axis of the tubular portion 20. The slot 22 comprises multiple notches defined in the inner periphery of the second hole 21.

The driving member 30 is an annular member and has multiple teeth 31 defined in the outer periphery thereof. The teeth 31 are located corresponding to the slot 22. The driving member 30 has a cone-shaped first ratchet portion 32 formed axially thereon and the first ratchet portion 32 comprises multiple cone-shaped notches 33 or protrusions. In this embodiment, the first ratchet portion 32 comprises multiple cone-shaped notches 33. Each of the notches 33 in radial direction is composed of a first contact surface 34 and a second contact surface 35. Each of the first and second contact surfaces 34, 35 is a triangular surface. The first contact surface 34 is smaller than the second contact surface 35. The driving member 30 has a stop 36 which extends axially from one side thereof which is located away from the first ratchet portion 32. In this embodiment, there are two stops 36. The teeth 31 are engaged with the slot 22 and the first ratchet portion 32 faces the hub 10. The driving member 30 is movable linearly in the slot 22.

The passive member 40 is an annular member and has a second fixing portion 41 which is located corresponding to the first fixing portion 13. The second fixing portion 41 has outer threads which are located corresponding to the inner threads of the first fixing portion 13. The passive member 40 has a cone-shaped second ratchet portion 42 formed axially thereon and the second ratchet portion 42 is engaged with the first ratchet portion 32. The second ratchet portion 42 has multiple cone-shaped protrusion 43 which face the first ratchet portion 32. Each of the protrusions 43 in radial direction is composed of a third contact surface 44 and a fourth contact surface 45. Each of the third and fourth contact surfaces 44, 45 is a triangular surface. The third contact surface 44 is smaller than the fourth contact surface 45. The protrusions 43 each have a triangular cross section in radial direction. The second fixing portion 41 of the passive member 40 is threadedly connected to the first fixing portion 13. The second ratchet portion 42 faces the tubular portion 20 and is connected to the first ratchet portion 32. The first and third contact surfaces 34, 44 are matched to each other, and the second and fourth contact surfaces 35, 45 are matched to each other.

The returning member 50 is located between the tubular portion 20 and the driving member 30. The returning member 50 is a magnet unit which has a first magnet 51 and a second magnet 52. The first magnet 51 is connected to the driving member 30 and located away from the first ratchet portion 32. The second magnet 52 is located in the second hole 21 of the tubular portion 20. Two respective facing ends of the first and second magnets 51, 52 have the same magnetic pole. Cooperated with the engagement of the first and second ratchet portions, and the returning member 50, by the magnetically repulsion, the driving member 30 rotates toward the passive member 40.

The tube 60 has its inner diameter larger than the diameter of the axle 13, the inner diameter of the tube 60 is smaller than the diameter of the driving member 30, the passive member 40 and the returning member 50. The tube 60 is mounted to the axle 12 located between the hub 10 and the tubular portion 20, and the tube 60 is located between the axle 12 and the driving member 30, and between the passive member 40 and the returning member 50. The tube 60 guides the linear movement of the driving member 30 and the returning member 50.

When the tubular portion 20 rotates the driving member 30, the first contact surface 34 of the first ratchet portion 32 pushes the third contact surface 44 of the second ratchet portion 42 so as to rotate the hub 10. When the tubular portion 20 rotates in the opposite direction, the second contact surface 35 of the first ratchet portion 32 slides relative to the fourth contact surface 45 of the second ratchet portion 42, cooperated with the linear movements between the driving member 30 and the tubular portion 20, the driving member 30 is disengaged from the passive member 40 and a gap S is generated due to the linear movement.

As mentioned above, the driving member 30 and the returning member 50 are moved linearly in the tubular portion 2. By the engagement between the cone-shaped surfaces of the first and second ratchet portions 32, 42, the contact area between the cone-shaped surfaces composed of two triangular surfaces is reduced and which means less friction is occurred. The gap S between the driving member 30 and the passive member 40 allows the engagement and disengagement to be activated more quickly and the transmission is more sensitive. The driving member 30 and the passive member 40 return more quickly. The passive member 40 is fixed to the hub 10 so that the assembly is easy and the structure is simplified.

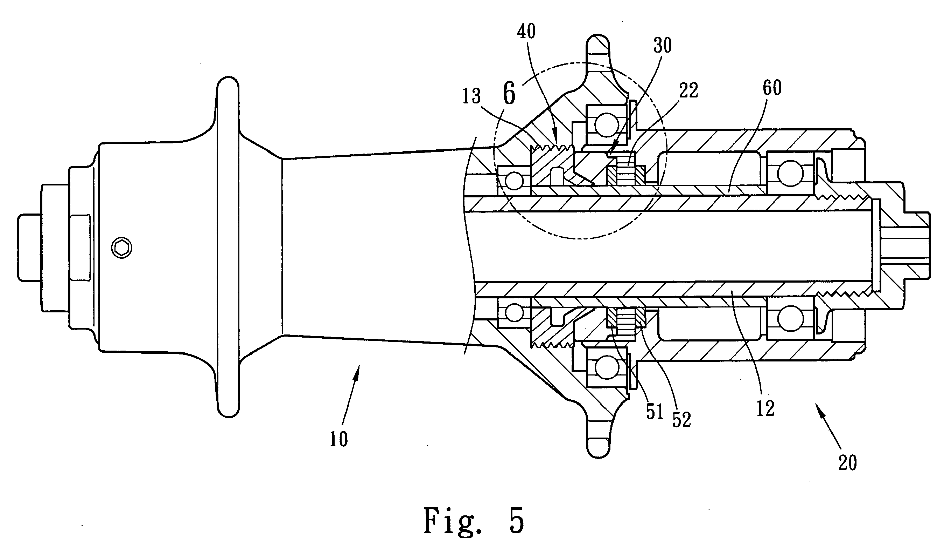

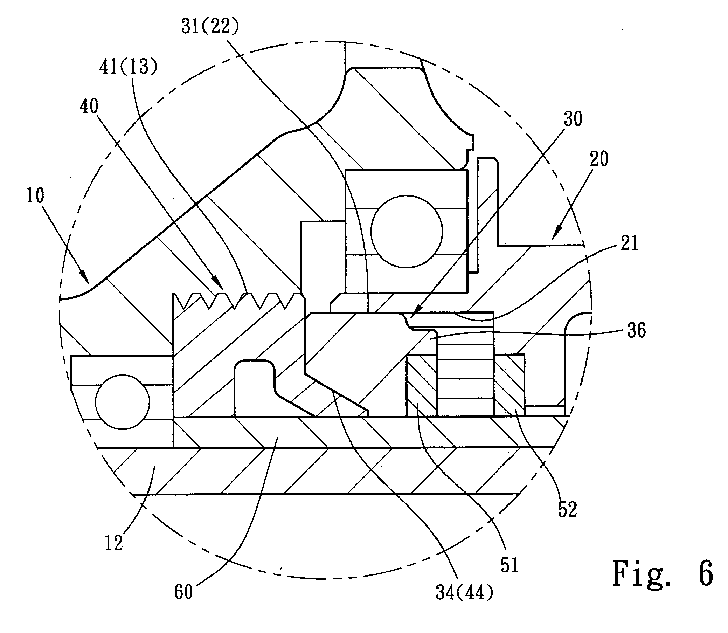

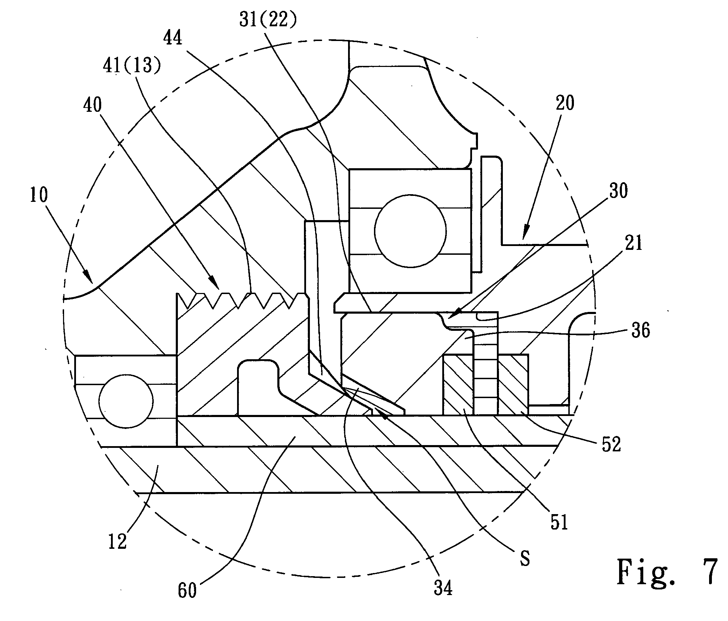

When in use, as shown in Figs. 5 and 6, the first ratchet portion 32 of the driving member 30 is engaged with the second ratchet portion 42 of the passive member 40, cooperated with the force of the returning member 50 and the rotation of the tubular portion 20, the first contact surface 34 and the third contact surface 44 are pushed toward each other to drive the hub 10 and transmit torque. When rotation in the opposite direction as shown in Fig. 7, the second contact surface 35 of the first ratchet portion 32 slides relative to the fourth contact surface 45 of the second ratchet portion 42, cooperated with the relative linear movement between the teeth 31 within the slot 22, the gap S is formed between the first and third contact surfaces 34, 44. The driving member 30 returns by the force of the returning member 50.

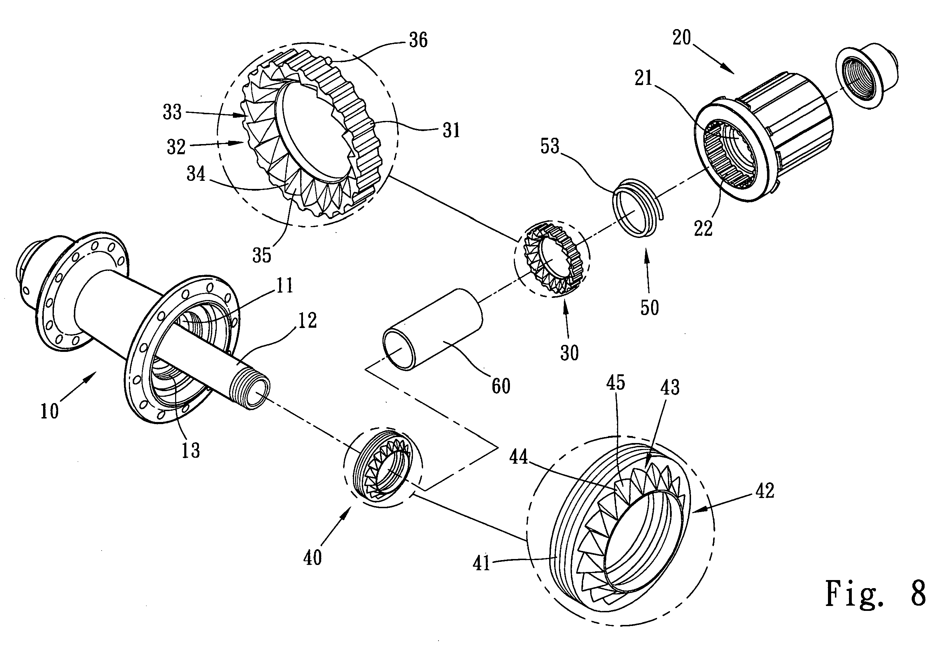

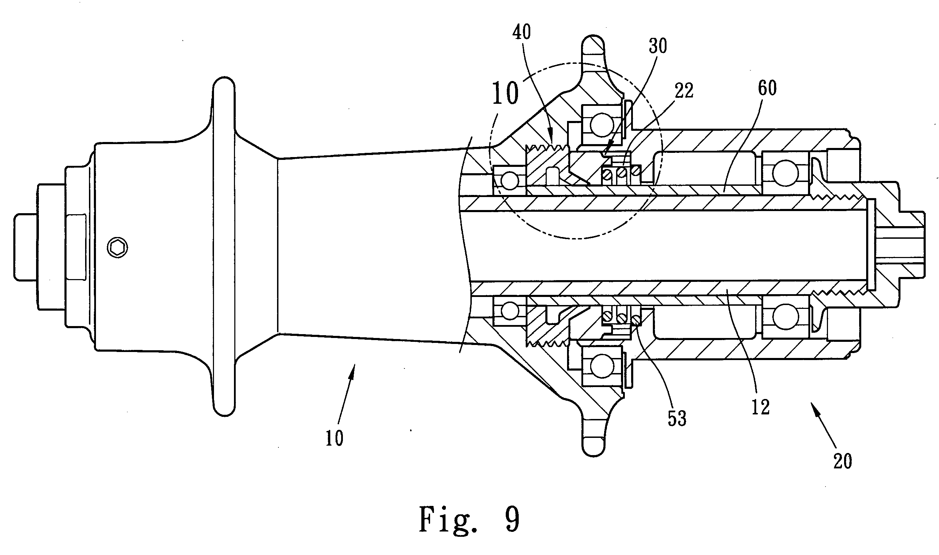

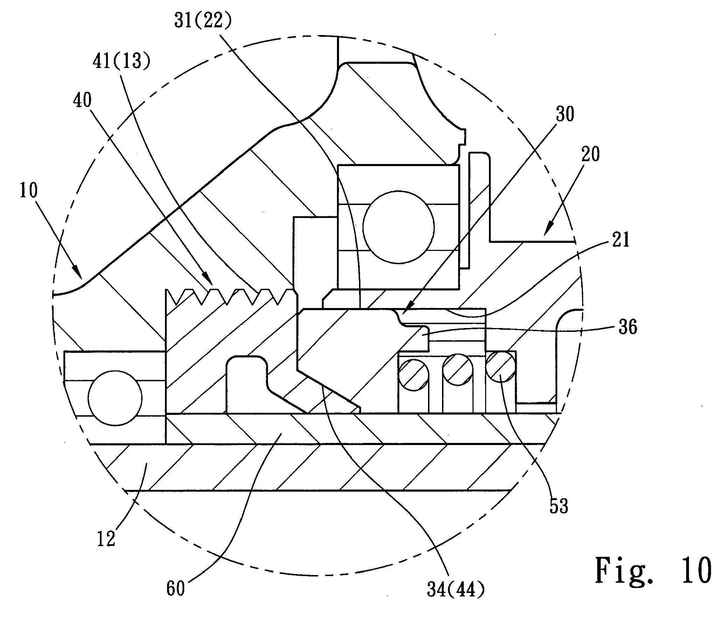

As shown in Figs. 8 to 10, the second embodiment of the present invention is shown and the returning member 50 is a resilient member 53 such as a spring. The resilient member 53 is located between the tubular portion 20 and the driving member 30. One end of the resilient member 53 is located between the stops 46 of the driving member 40. By the force from the resilient member 53, the driving member 30 moves toward the passive member 40.

The first and second ratchet portions 32, 42 have notches 33 and protrusions 43, and each of the notches 33 and the protrusions 43 have cone-shaped portion that is composed by two inclined triangular surfaces so that the contact area is reduced and the friction is also reduced. When rotation in the opposite direction, a gap S is formed between the driving member 30 and the passive member 40 due to the linear movements, by the force of the returning members 50, the first and second ratchet portions 32, 42 can be engaged again quickly. Furthermore, the first and second fixing portions 13, 41 are threadedly connected to each other, cooperated with the linear movement of the driving member 30 in the second hole 21 of the tubular portion 20, the one-side movement of the driving member is not interfered. The structure of the hub assembly is simplified and the weight is reduced.

The tube 60 is mounted to the axle 12 located between the hub 10 and the tubular portion 20, and the tube 60 is located between the axle 12 and the driving member 30, and between the passive member 40 and the returning member 50. The tube 60 guides the linear movement of the driving member 30 and the returning member 50.

The stops 36 of the driving member 30 position the returning member 50 to avoid the returning member 50 from tilting off when operation.

While we have shown and described the embodiment in accordance with the present invention, it should be clear to those skilled in the art that further embodiments may be made without departing from the scope of the present invention.

## Claims

1. A hub assembly comprising:
a hub (10) having a first hole (11) defined in one end thereof and an axle (12) extending through the first hole (11), a first fixing portion (13) defined in an inner periphery of the first hole (11) and the first fixing portion (13) being parallel to an axis of the hub (10);
a tubular portion (20) having a second hole (21) in one end thereof and a slot (22) defined in an inner periphery of the second hole (21), the slot being (22) parallel to an axis of the tubular portion (20);
a driving member (30) being an annular member and having multiple teeth (31) defined in an outer periphery thereof, the teeth (31) located corresponding to the slot (22), the driving member (30) having a cone-shaped first ratchet portion (32) formed axially thereon, the teeth (31) of the driving member (30) engaged with the slot (22) and the driving member (30) movable linearly in the slot (22);
a passive member (40) being an annular member and having a second fixing portion (41) which is located corresponding to the first fixing portion (13), the passive member (40) having a cone-shaped second ratchet portion (42) formed axially thereon which is engaged with the first ratchet portion (32), the second fixing portion (41) being fixed to the first fixing portion (13), and
a returning member (50) located between the tubular portion (20) and the driving member (30), **characterised in that** the cone-shaped first ratchet portion (32) has two triangular contact surfaces (34, 35) which form a cone-shaped surface in radial direction, the two triangular contact surfaces (34, 35) having different areas.

2. The hub assembly as claimed in claim 1, wherein two respective threaded portions are located respectively to the first (13) and second (41) fixing portions so that the first (13) and second (41) fixing portions are connected to each other.

3. The hub assembly as claimed in claim 1, wherein the first ratchet portion (32) comprises multiple notches (33) or protrusions and each of the notches (33) or protrusions in radial direction is composed of a first contact surface (34) and a second contact surface (35), each of the first (34) and second (35) contact surfaces is a triangular surface, the first contact surface (34) is smaller than the second contact surface (35), the second ratchet portion (42) has multiple cone-shaped protrusions (43) or notches which face the first ratchet portion (32), each of the protrusions (43) or notches in radial direction is composed of a third contact surface (44) and a fourth contact surface (45), each of the third (44) and fourth (45) contact surfaces is a triangular surface, the third contact surface (44) is smaller than the fourth contact surface (45), the first (32) and second (42) ratchet portions are engaged with each other, the first (34) and third (44) contact surfaces are matched to each other, the second (35) and fourth (45) contact surfaces are matched to each other.

4. The hub assembly as claimed in claim 1, wherein the driving member (30) has a stop (36) which extends axially from one side thereof which is located away from the first ratchet portion (32), the returning member (50) is positioned by the stop (36).

5. The hub assembly as claimed in claim 1, wherein the returning member (50) is a magnet unit which has a first magnet (51) and a second magnet (52), the first magnet (51) is connected to the driving member (30) and located away from the first ratchet portion (32), the second magnet (52) is located in the second hole (21) of the tubular portion (20), two respective facing ends of the first (51) and second (52) magnets are the same magnetic pole.

6. The hub assembly as claimed in claim 1, wherein the returning member (50) is a resilient member (53).

7. The hub assembly as claimed in claim 1, wherein a tube (60) has an inner diameter larger than a diameter of the axle (12), the inner diameter of the tube (60) is smaller than a diameter of the driving member (30), the passive member (40) and the returning member (50), the tube (60) is mounted to the axle (12) and located between the axle (12) and the driving member (30), and between the passive member (40) and the returning member (50).

## Patentansprüche

1. Nabenbaugruppe umfassend:
eine Nabe (10) mit einem in einem Ende von dieser ausgebildeten ersten Loch (11) und einer sich durch das erste Loch (11) erstreckenden Achse (12), sowie einem in einem inneren Umfang des ersten Lochs (11) ausgebildeten ersten Befestigungsteil (13), wobei der erste Befestigungsteil (13) parallel zu einer Achse der Nabe (10) ist;
ein rohrförmiger Teil (20) mit einem zweiten Loch (21) in einem Ende von diesem und einem in einem inneren Umfang des zweiten Lochs (21) ausgebildeten Schlitz (22), wobei der Schlitz (22) parallel zu einer Achse des rohrförmigen Teils (20) ist;
ein antreibendes Element (30), das ein ringförmiges Element ist und mehrere in einem äußeren Umfang von diesem ausgebildete Zähne (31) aufweist, wobei die Zähne (31) entsprechend zum Schlitz (22) angeordnet sind, das antreibende Element (30) einen kegelförmigen ersten Klinkenteil (32) aufweist, der axial auf diesem ausgebildet ist, die Zähne (31) des antreibenden Elements (30) im Schlitz (22) eingreifen und das antreibende Element (30) im Schlitz (22) linear beweglich ist;
ein passives Element (40), das ein ringförmiges Element ist und einen zweiten Befestigungsteil (41) aufweist, der entsprechend zum ersten Befestigungsteil (13) angeordnet ist, wobei das passive Element (40) einen kegelförmigen zweiten Klinkenteil (42) aufweist, der axial auf diesem ausgebildet ist und in den ersten Klinkenteil (32) eingreift, wobei der zweite Befestigungsteil (41) am ersten Befestigungsteil (13) befestigt ist, und
ein zwischen dem rohrförmigen Teil (20) und dem antreibenden Element (30) angeordnetes rückführendes Element (50),
**dadurch gekennzeichnet, dass** der kegelförmige erste Klinkenteil (32) zwei dreieckige Kontaktflächen (34, 35) aufweist, die eine kegelförmige Fläche in radialer Richtung bilden, wobei die beiden dreieckigen Kontaktflächen (34, 35) unterschiedliche Flächen aufweisen.

2. Nabenbaugruppe nach Anspruch 1, wobei zwei entsprechende Gewindeteile entsprechend zum ersten (13) und zweiten (41) Befestigungsteil angeordnet sind, so dass der erste (13) und der zweite (41) Befestigungsteil miteinander verbunden sind.

3. Nabenbaugruppe nach Anspruch 1, wobei der erste Klinkenteil (32) mehrere Aussparungen (33) oder Vorsprünge umfasst und jede der Aussparungen (33) oder Vorsprünge in radialer Richtung aus einer ersten Kontaktfläche (34) und einer zweiten Kontaktfläche (35) besteht, jede der ersten (34) und zweiten (35) Kontaktfläche eine dreieckige Fläche ist, die erste Kontaktfläche (34) kleiner ist als die zweite Kontaktfläche (35), der zweite Klinkenteil (42) mehrere kegelförmige Vorsprünge (43) oder Aussparungen aufweist, die zum ersten Klinkenteil (32) zeigen, jede der Vorsprünge (43) oder Aussparungen in radialer Richtung aus einer dritten Kontaktfläche (44) und einer vierten Kontaktfläche (45) besteht, jede der dritten (44) und vierten (45) Kontaktfläche eine dreieckige Fläche ist, die dritte Kontaktfläche (44) kleiner ist als die vierte Kontaktfläche (45), der erste (32) und zweite (42) Klinkenteil ineinander eingreifen, die erste (34) und dritte (44) Kontaktfläche aneinander angepasst sind sowie die zweite (35) und vierte (45) Kontaktfläche aneinander angepasst sind.

4. Nabenbaugruppe nach Anspruch 1, wobei das antreibende Element (30) einen Anschlag (36) aufweist, der sich axial von einer Seite von diesem erstreckt, die vom ersten Klinkenteil (32) entfernt angeordnet ist, wobei das rückführende Element (50) durch den Anschlag (36) positioniert wird.

5. Nabenbaugruppe nach Anspruch 1, wobei das rückführende Element (50) eine Magneteinheit ist, die einen ersten Magneten (51) und einen zweiten Magneten (52) aufweist, wobei der erste Magnet (51) mit dem antreibenden Element (30) verbunden und vom ersten Klinkenteil (32) entfernt angeordnet ist, der zweite Magnet (52) im zweiten Loch (21) des rohrförmigen Teils (20) angeordnet ist und zwei entsprechend ausgerichtete Enden des ersten (51) und zweiten (52) Magneten den gleichen magnetischen Pol bilden.

6. Nabenbaugruppe nach Anspruch 1, wobei das rückführende Element (50) ein elastisches Element (53) ist.

7. Nabenbaugruppe nach Anspruch 1, wobei ein Rohr (60) einen Innendurchmesser größer als ein Durchmesser der Achse (12) aufweist, der Innendurchmesser des Rohrs (60) kleiner ist als ein Durchmesser des antreibenden Elements (30), des passiven Elements (40) und des rückführenden Elements (50), das Rohr (60) an der Achse (12) montiert und zwischen der Achse (12) und dem antreibenden Element (30) und zwischen dem passiven Element (40) und dem rückführenden Element (50) angeordnet ist.

## Revendications

1. Ensemble moyeu comprenant :
un moyeu (10) ayant un premier trou (11) défini dans une extrémité de celui-ci et un axe (12) s'étendant à travers le premier trou (11), une première partie de fixation (13) définie dans une périphérie interne du premier trou (11) et la première partie de fixation (13) étant parallèle à un axe du moyeu (10) ;
une partie tubulaire (20) ayant un second trou (21) dans une extrémité de celui-ci et une fente (22) définie dans une périphérie interne du second trou (21), la fente (22) étant parallèle à un axe de la partie tubulaire (20) ;
un élément d'entraînement (30), qui est un élément annulaire et qui a de multiples dents (31) définies dans une périphérie externe de celui-ci, les dents (31) étant situées de façon correspondante à la fente (22), l'élément d'entraînement (30) ayant une première partie d'encliquetage en forme de cône (32) formée axialement sur celui-ci, les dents (31) de l'élément d'entraînement (30) étant engagées avec la fente (22) et l'élément d'entraînement (30) étant déplaçable linéairement dans la fente (22) ;
un élément passif (40), qui est un élément annulaire et qui a une seconde partie de fixation (41) qui est située de façon correspondante à la première partie de fixation (13), l'élément passif (40) ayant une seconde partie d'encliquetage en forme de cône (42) formée axialement sur celui-ci qui est engagée avec la première partie d'encliquetage (32), la seconde partie de fixation (41) étant fixée à la première partie de fixation (13), et
un élément de retour (50) situé entre la partie tubulaire (20) et l'élément d'entraînement (30), **caractérisé par le fait que** la première partie d'encliquetage en forme de cône (32) a deux surfaces de contact triangulaires (34, 35) qui forment une surface en forme de cône en direction radiale, les deux surfaces de contact triangulaires (34, 35) ayant des surfaces différentes.

2. Ensemble moyeu selon la revendication 1, dans lequel deux parties filetées respectives sont situées respectivement sur la première (13) et la seconde (41) partie de fixation de telle sorte que les première (13) et seconde (41) parties de fixation sont reliées l'une à l'autre.

3. Ensemble moyeu selon la revendication 1, dans lequel la première partie d'encliquetage (32) comprend de multiples encoches (33) ou saillies, et chacune des encoches (33) ou saillies en direction radiale est composée d'une première surface de contact (34) et d'une deuxième surface de contact (35), chacune des première (34) et deuxième (35) surfaces de contact est une surface triangulaire, la première surface de contact (34) est plus petite que la deuxième surface de contact (35), la seconde partie d'encliquetage (42) a de multiples saillies (43) ou encoches en forme de cône qui font face à la première partie d'encliquetage (32), chacune des saillies (43) ou encoches en direction radiale est composée d'une troisième surface de contact (44) et d'une quatrième surface de contact (45), chacune des troisième (44) et quatrième (45) surfaces de contact est une surface triangulaire, la troisième surface de contact (44) est plus petite que la quatrième surface de contact (45), les première (32) et seconde (42) parties d'encliquetage sont engagées l'une avec l'autre, les première (34) et troisième (44) surfaces de contact sont appariées l'une à l'autre, les deuxième (35) et quatrième (45) surfaces de contact sont appariées l'une à l'autre.

4. Ensemble moyeu selon la revendication 1, dans lequel l'élément d'entraînement (30) a une butée (36) qui s'étend axialement à partir d'un côté de celui-ci qui est situé à l'opposé de la première partie d'encliquetage (32), l'élément de retour (50) étant positionné par la butée (36) .

5. Ensemble moyeu selon la revendication 1, dans lequel l'élément de retour (50) est une unité à aimants qui a un premier aimant (51) et un second aimant (52), le premier aimant (51) est relié à l'élément d'entraînement (30) et situé à l'opposé de la première partie d'encliquetage (32), le second aimant (52) est situé dans le second trou (21) de la partie tubulaire (20), deux extrémités se faisant face respectives des premier (51) et second (52) aimants sont le même pôle magnétique.

6. Ensemble moyeu selon la revendication 1, dans lequel l'élément de retour (50) est un élément élastique (53) .

7. Ensemble moyeu selon la revendication 1, dans lequel un tube (60) a un diamètre interne plus grand qu'un diamètre de l'axe (12), le diamètre interne du tube (60) est plus petit qu'un diamètre de l'élément d'entraînement (30), de l'élément passif (40) et de l'élément de retour (50), le tube (60) est monté sur l'axe (12) et situé entre l'axe (12) et l'élément d'entraînement (30), et entre l'élément passif (40) et l'élément de retour (50).
